# FASCICULE DE BREVET EUROPEEN

(11) **EP 0 626 250 B1**
(45) Date de publication et mention de la délivrance du brevet: **04.08.1999**
(21) Numéro de dépôt: 94450002.4
(22) Date de dépôt: 24.05.1994
(51) Int. Cl.: B29C 53/82, B29C 57/00, B29C 33/52, B29C 70/00, F16C 3/02

(54) **Procédé de fabrication de bielle en matériau composite monobloc par mise en place de fibres pré-imprégnées sur un mandrin extractible et bielle ainsi obtenue**
Verfahren zur Herstellung einer aus monolithischem Verbundwerkstoff hergestellten Pleuelstange durch Auflegen von vorimprägnierten Fasern auf einer entfernbaren Form und dadurch erhaltene Pleuelstange
Method for manufacturing a connecting rod from monolithic composite material by placing preimpregnated fibres on an extractable mandrel and connecting rod obtained by such a method

(30) Priorité: 26.05.1993 FR 9306614
(43) Date de publication de la demande: 30.11.1994
(73) Titulaire: AEROSPATIALE Société Nationale Industrielle, 75781 Paris Cédex 16 (FR)
(72) Inventeur: Auberon, Marcel, F-33185 Le Haillan (FR); Fuchs, Jean-François, F-33480 Sainte Helene (FR); Leard, Jean-Philippe, F-33700 Merignac (FR)
(74) Mandataire: Thébault, Jean-Louis

(56) Documents cités:
- EP-A- 0 013 648
- DE-A- 2 927 955
- DE-A- 3 936 999
- FR-A- 1 296 806
- US-A- 3 970 495
- US-A- 4 218 895
- PATENT ABSTRACTS OF JAPAN vol. 012, no. 227 (M-713) 29 Juin 1988 & JP-A-63 025 023 (SHOWA AIRCRAFT) 2 Février 1988

## Description

La présente invention a trait à la fabrication de bielles destinées à être disposées entre deux points d'une structure et susceptibles de subir des efforts longitudinaux et plus particulièrement des bielles en matériau composite monobloc constituées d'une partie courante creuse de section cylindrique ou non, reliant deux têtes de bielle en forme notamment de chape de fixation.

On sait déjà, par les brevets français FR-2.446.180 et FR-2.550.123, réaliser des bielles monoblocs en matériau composite, dont la partie courante et les parties d'extrémité sont entièrement constituées de fibres pré-imprégnées mises en place sur un mandrin approprié qui est ensuite placé dans un moule dont la paroi interne épouse la forme de la bielle à réaliser, à des fins de polymérisation.

Dans FR-2.446.180, les fibres sont sous la forme d'un tissu enroulé sur plusieurs tours ou "plis" sur un mandrin en matériau déformable qui est ensuite aplati aux deux extrémités.

Une telle technique, outre qu'elle interdit de réaliser des têtes de bielle à chape, ne permet pas de moduler à volonté les caractéristiques locales du matériau composite le long de la bielle puisque l'on part de tissus pré-existants qui sont simplement plaqués sur le mandrin. En outre, il ne s'agit pas véritablement de bielles monoblocs puisque le mandrin demeure prisonnier à l'intérieur des bielles.

Dans FR-2.550.123 les fibres sont déposées de manière unidirectionnelle, dans l'axe longitudinal de la bielle sur un mandrin expansible qui, ensuite, sera "gonflé" pour épouser le moule.

Une telle dépose unidirectionnelle, imposée par la mise en expansion du mandrin ainsi revêtu, ne permet pas de faire varier longitudinalement à la bielle les caractéristiques de dépose des fibres et privilégie uniquement la résistance aux efforts longitudinaux.

Par ailleurs, par US-A-3 970 495 et US-A-4 218 895, on connaît la réalisation d'un arbre creux de transmission par bobinage de fibres pré-imprégnées sur un mandrin permettant l'obtention de parois d'épaisseur évolutive.

Toutefois, de tels arbres de transmission, qui ne subissent que des efforts de torsion au contraire de bielles qui travaillent essentiellement en traction-compression, sont munis aux extrémités de moyens de connexion qui n'ont rien à voir avec ceux de belles, à savoir des chapes à une ou deux joues.

Les enseignements des deux documents ci-dessus ne permettent pas la réalisation de belles munies de telles chapes.

La présente invention vise à remédier aux inconvénients des techniques connues en proposant une nouvelle technique de réalisation par dépose de fibres pré-imprégnées sur un mandrin de bielles monobloc du type mentionné ci-dessus et présentant des épaisseurs de paroi évolutives.

A cet effet, l'invention a pour objet un procédé de fabrication d'une belle monobloc en matériau composite, comprenant une partie courante creuse cylindrique reliée à chaque extrémité à une chape par une partie de raccordement d'épaisseur évolutive, consistant :
- à réaliser sur un arbre central rigide un mandrin extractible, notamment un mandrin fusible, comportant une partie centrale cylindrique prolongée à chaque extrémité par une partie de raccordement correspondant auxdites parties de raccordement de la bielle et elle-même prolongée par une pièce de section rectangulaire correspondant auxdites chapes de la bielle ;
- à bobiner et/ou déposer au contact sur ledit mandrin et lesdites pièces de section rectangulaire des fibres pré-imprégnées, suivant un nombre de couches et une inclinaison des fibres par rapport à l'axe du mandrin prédéterminés ;
- à polymériser avec application d'une pression homogène de compactage sur toute la surface externe de l'ensemble ainsi obtenu ;
- puis, à retirer lesdits mandrin et pièces et percer et usiner lesdites chapes aux cotes requises.

L'invention a également pour objet un procédé de fabrication d'une bielle monobloc en matériau composite, comprenant une partie courante creuse cylindrique reliée par une partie de raccordement d'épaisseur évolutive, d'un côté, à une chape et, de l'autre, à une tête aplatie, consistant :
- à réaliser sur un arbre central rigide un mandrin extractible, notamment un mandrin fusible, comportant une partie centrale cylindrique prolongée à chaque extrémité par une partie de raccordement correspondant auxdites parties évolutives de la bielle, l'une desdites parties de raccordement étant prolongée par une pièce de section rectangulaire correspondant à la chape de la bielle, cependant que l'autre desdites parties de raccordement est prolongée par une pièce de section rectangulaire correspondant à ladite tête aplatie de la bielle ;
- à bobiner et/ou déposer au contact sur ledit mandrin et lesdites pièces de section rectangulaire, des fibres pré-imprégnées, suivant un nombre de couches et une inclinaison des libres par rapport à l'axe du mandrin prédéterminés ;
- à retirer ladite pièce correspondant à ladite tête aplatie de la bielle et presser à l'aide de moyens de conformation appropriés à la forme de ladite tête aplatie, l'un contre l'autre les flancs opposés de la partie du matériau composite en regard de ladite pièce retirée, pour former ladite tête aplatie ;
- à polymériser avec application d'une pression homogène de compactage sur toute la surface externe de l'ensemble ainsi obtenu ;
- puis à retirer lesdits mandrin et pièce correspondant à ladite chape de la bielle et percer et usiner lesdites chape et tête aplatie aux cotes requises.

De préférence, après bobinage-dépose des fibres et avant polymérisation-compactage du matériau composite, la ou chaque chape, avec sa partie de raccordement, est munie de moyens de conformation appropriés à la forme de la chape de la bielle.

Suivant un mode opératoire, l'ensemble de l'arbre central rigide, du mandrin muni des fibres, ainsi que, le cas échéant, des moyens de conformation ci-dessus, est disposé à l'intérieur d'une vessie qui est ensuite mise sous vide, puis ledit ensemble avec sa vessie est placé dans un autoclave sous pression pour assurer ladite polymérisation.

Suivant une application du procédé à la réalisation d'une bielle comportant des parties de fixation reliées à une partie courante d'épaisseur de paroi constante par une partie de raccordement de section et d'épaisseur de paroi variables, on bobine des fibres sur l'ensemble du mandrin par enroulement circonférentiel et longitudinal et, sur lesdites parties de fixation et lesdites parties de raccordement, on met en place des fibres par bobinage ou dépose au contact en fonction des épaisseurs locales à obtenir.

Suivant un mode de mise en oeuvre, entre certaines au moins des couches de fibres d'au moins la partie courante, on dépose au contact un film de colle et éventuellement au moins une couche de tissu de verre.

Par mandrin extractible on entend un mandrin qui, après polymérisation du matériau composite, peut être retiré de l'intérieur de la bielle par l'une et/ou l'autre de ses extrémités sans atteinte de l'intégrité de la bielle. Par exemple et suivant un mode de mise en oeuvre, le mandrin est moulé en un matériau fusible, notamment un mélange de sable et de liant tel que le matériau dénommé commercialement "arényl".

Le procédé de réalisation de bielles par bobinage-dépose au contact selon l'invention permet une mécanisation de la fabrication industrielle assurant une très bonne reproductibilité et une diminution des coûts par rapport aux techniques concurrentes connues, notamment les techniques de drapage qui nécessitent beaucoup de main d'oeuvre et d'inter-opérations de découpes des tissus.

De plus, la technique de bobinage-dépose au contact permet de bien maîtriser la qualité de la bielle et ses performances dans l'absorption des efforts, du fait de l'optimisation du sens et de l'orientation des fibres dans les différentes parties de la bielle.

Enfin, la conjonction d'une pression externe homogène exercée sur toute la surface externe de la bielle et de la polymérisation assure un compactage optimal du matériau composite.

D'autres caractéristiques et avantages ressortiront de la description qui va suivre d'un mode de mise en oeuvre du procédé de l'invention, description donnée à titre d'exemple uniquement et en regard des dessins annexés sur lesquels :
- Figures 1a, 1b et 1c représentent respectivement une vue de dessus, une vue en élévation et une vue en bout d'une bielle à partie courante cylindrique et chape à chaque extrémité ;
- Figures 2a et 2b représentent respectivement une vue en élévation et une vue de dessus d'un mandrin selon l'invention, pour la réalisation d'une bielle du type des figures 1a à 1c ;
- Figure 3 illustre une phase de bobinage d'un mandrin du type de celui des figures 2a, 2b ;
- Figure 4 représente schématiquement en coupe longitudinale axiale un mandrin revêtu de fibres et muni à ses extrémités de pièces de mise en forme ;
- Figure 5 est une vue en perspective illustrant un mode de réalisation de pièces de conformation au droit d'une chape de la bielle,
- Figure 6 représente partiellement le mandrin de la figure 4 inséré dans une vessie de compactage, et
- Figures 7 à 14 illustrent la réalisation d'une bielle pourvue à une extrémité d'une chape et à l'autre extrémité d'une tête aplatie.

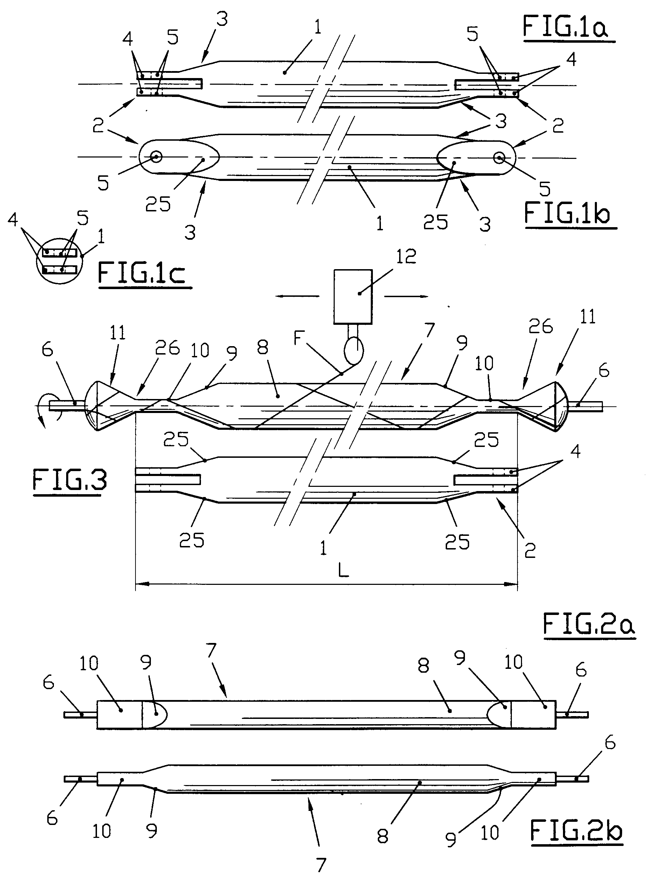

Sur les figures 1a à 1c on a représenté schématiquement un type de bielle réalisable avec le procédé de l'invention, constitué d'une partie courante creuse cylindrique 1, d'épaisseur de paroi constante, reliant deux têtes de bielle identiques en forme de chape 2 s'inscrivant dans un cylindre de diamètre légèrement inférieur à celui de la partie courante 1, les chapes étant reliées à cette dernière par une partie de raccordement 3 de section évolutive et d'épaisseur de paroi allant en s'épaississant de la partie courante 1 à la chape 2. Chaque chape 2 est constituée de deux joues parallèles 4 de section rectangulaire et percées de deux trous 5 en regard.

Les figures 2a,2b représentent schématiquement un type de mandrin apte, selon le procédé de l'invention, à la réalisation de bielles du type des figures 1a à 1c en matériau composite monobloc.

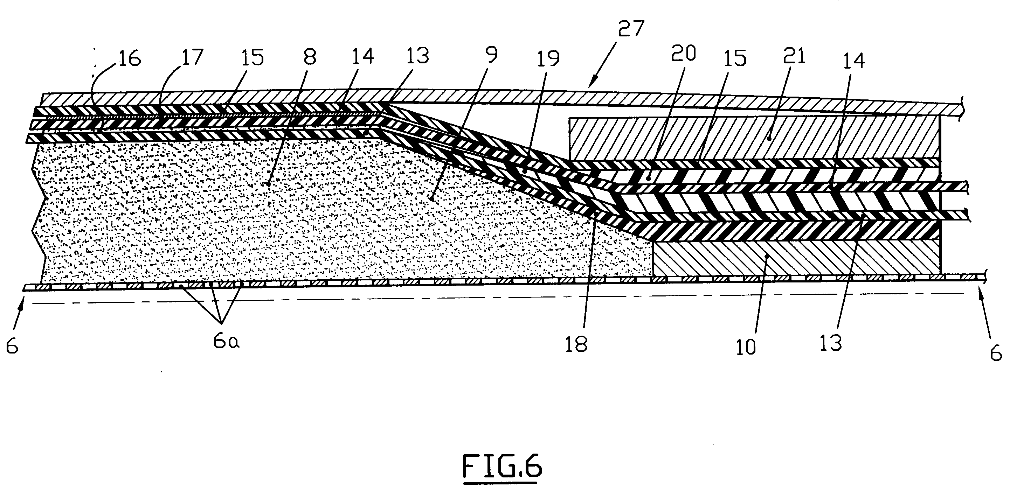

Ce mandrin est constitué d'une tige centrale rigide 6, par exemple métallique, de préférence creuse avec une paroi poreuse ou percée de trous (6a, figure 6) pour assurer le dégazage du matériau du mandrin lors de sa cuisson, sur laquelle est moulé un corps 7 en sable malaxé avec du liant, par exemple le matériau dénommé commercialement "arényl" qui est un matériau soluble dans l'eau chaude et qui peut donc être fondu et récupéré. Le corps 7 est moulé à la forme générale intérieure de la bielle à réaliser.

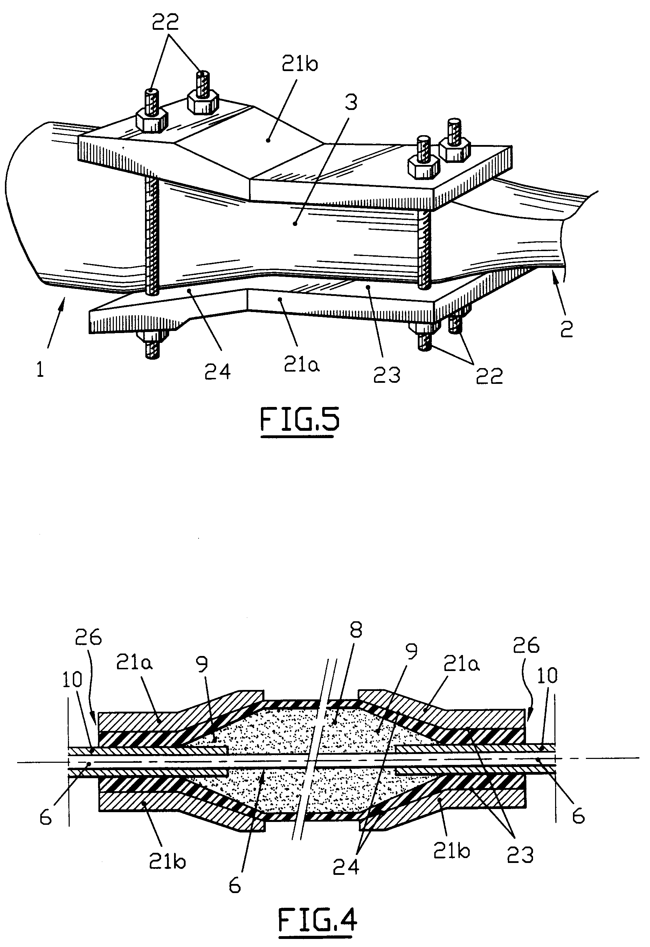

Le corps 7 présente une partie centrale cylindrique 8, prolongée à chaque extrémité par une partie de raccordement 9 correspondant aux parties évolutives 3 de la bielle. Les parties de raccordement 9 sont prolongées par une partie 10 de section rectangulaire, constituée, comme représenté sur la figure 4, par une pièce métallique enfilée sur la tige creuse centrale 6 et servant de support pour la réalisation des chapes 2 de la bielle.

La figure 3 représente le mandrin dans sa totalité, y compris les éléments d'extrémité en prolongement des parties 10 et constitués par des poires de retournement 11 assurant la boucle de bobinage lors du retour de la tête 12 de mise en place de fibres F qui sont, par exemple, des fibres de carbone pré-imprégnées d'une résine appropriée.

En partie inférieure de la figure 3 est représentée la bielle de la figure 1a qui sera réalisée avec le mandrin 7, la bielle occupant une longueur L de mandrin égale à la distance entre les deux poires 11.

Après bobinage-dépose au contact du mandrin et polymérisation du matériau composite, on procède aux opérations finales d'usinage et finitions.

La figure 3 illustre le bobinage du mandrin à l'aide de la tête 12.

Le mandrin est, avant bobinage-dépose au contact, avantageusement revêtu d'un film ou tissu non poreux afin d'éviter toute infiltration de résine dans le matériau du mandrin lors de la polymérisation ultérieure.

Les fibres F sont mises en place par bobinage ou par dépose au contact.

Le mandrin est revêtu par bobinage circonférentiel ou longitudinal suivant divers angles d'inclinaison par rapport à l'axe du mandrin.

Sur la figure 6 on a représenté deux couches de fibres bobinées longitudinalement, respectivement 13 et 14, s'étendant sur toute la longueur du mandrin, comme illustré par la figure 3, et une couche 15 de fibres bobinées circonférentiellement, s'étendant également sur toute la longueur du mandrin.

Entre les deux couches de fibres longitudinales 13,14, en regard de la partie cylindrique 8, est interposé un film de colle 16, mis en place par dépose au contact, cependant qu'entre la deuxième couche de fibres longitudinales 14 et la couche de fibres circonférentielles 15 est mis en place par dépose au contact un tissu de verre 17.

L'épaisseur des fibres au droit de la partie cylindrique 8 est constante d'un bout à l'autre.

A hauteur des parties 9 du mandrin, l'épaisseur des couches de fibres est évolutive et va en s'accroissant jusque dans la zone des chapes à hauteur des parties 10.

A cet effet, entre la première couche 13 et le mandrin (partie 9) et entre les couches 13 et 14 sont déposées au contact des fibres, respectivement 18 et 19, par dépose circonférentielle ou longitudinale, en sorte d'obtenir l'évolution d'épaisseur désirée. La dépose est effectuée en sorte de réaliser l'évolution progressive d'épaisseur désirée entre les parties 8 et 10 du mandrin.

Bien entendu, la couche 18 est mise en place sur les parties 9,10 du mandrin avant la mise en place par bobinage de la première couche 13 et la couche 18 est mise en place immédiatement après ladite couche 13 et avant la seconde couche 14. Après la couche 14 est mise en place, par dépose au droit des parties 10, une troisième couche de fibres 20 qui déborde légèrement sur les parties 9. Les déposes des couches 18, 9 et 20 en regard des parties 10 se font en sorte d'obtenir une épaisseur totale constante de fibres.

La figure 6 a trait à un simple exemple illustratif de la structure de bielle selon l'invention, car il est évident que le nombre total de couches de fibres pré-imprégnées, de films de colle et de tissu de verre pourra être supérieur à celui représenté et que l'on pourra choisir tous modes de superposition des différentes couches au niveau de chacune des parties 8,9 et 10 du mandrin.

Le bobinage et la dépose au contact seront effectués selon divers angles, par exemple 0°, ± 25°, ± 45°; 90°.

Il est à noter que sur une même couche, l'angle d'inclinaison de la fibre bobinée ou déposée au contact peut varier selon la zone de la bielle.

De préférence, la couche de tissu de verre 17 est unique et constitue l'avant-dernière couche, la dernière couche (15) étant une couche de fibres bobinées circonférentiellement sur l'ensemble du mandrin.

Une fois les différentes couches mises en place, le mandrin est muni au droit de ses parties d'extrémité 9 et 10 de pièces de conformation des chapes de bielle, symbolisées en 21 sur la figure 6 et représentées plus en détail, suivant un mode de réalisation, sur les figures 4 et 5.

Les pièces de conformation sont par exemple deux plaques 21a,21b (figure 5) disposées en vis à vis en prenant en sandwich lesdites parties 9 et 10 et réunies par des tirants 22 permettant de régler la pression exercée par les plaques 21a,21b sur le matériau composite sous-jacent.

Les plaques 21a,21b comportent une surface interne plane 23 parallèle à l'axe du tube 6 et une surface interne plane inclinée 24 en correspondance avec la surface externe du matériau composite en regard des parties 9.

Les surfaces 23 et 24 définissent les faces externes des joues 4 des chapes 2 ainsi qu'une partie (25, figures lb et 3) des surfaces de raccordement entre les chapes et la partie courante de la bielle.

Après mise en place des pièces de conformation 21a,21b, le matériau composite est incisé aux deux extrémités en 26 (figures 3 et 4) et l'ensemble tube 6-mandrin 7-matériau composite-pièces de conformation est placé à l'intérieur d'une vessie étanche 27 (figures 4 et 6) qui est mise sous vide, ledit ensemble avec sa vessie étant ensuite placé en autoclave pour polymériser la résine du matériau composite.

L'autoclavage s'effectue suivant des températures et durées appropriées au cycle de polymérisation, l'étuve de l'autoclave étant, au début de la polymérisation, mise en pression à quelques bars.

La vessie 27, tout en assurant l'application d'une pression homogène de compactage sur toute la surface externe du matériau composite, évite aux gaz sous pression contenus dans l'autoclave de pénétrer dans ledit matériau.

La polymérisation terminée, la vessie 27 est retirée, les pièces d'extrémité 10 du mandrin sont extraites, puis le mandrin est plongé dans de l'eau chaude à 50°C maximum pour ramollir le sable (8,9), enlever le tube 6 et le film de protection du mandrin et enfin rincer l'intérieur et l'extérieur de la bielle ainsi réalisée.

La phase finale de finition consiste à usiner la bielle (mise à longueur L, détourage des chapes 2, surfaçage des joues 4, alésage des trous 5), puis à contrôler par exemple par ultra-sons la bielle.

La bielle finale est creuse dans sa partie courante 1 ainsi que dans ses deux parties de raccordement 3, l'espace intérieur débouchant sur l'extérieur entre les joues 4 des chapes 2. Dans le cas d'une partie courante 1 cylindrique et de chapes 2 de section générale rectangulaire, les parties de raccordement 3 présentent une surface externe qui est une surface de transition partant d'un cercle (partie courante 1) et aboutissant à un rectangle (chape 2).

Le type de mandrin utilisé selon l'invention peut résister à des pressions externes élevées. Ceci permet une mise en place des fibres par bobinage et dépose au contact, assurant un excellent compactage du matériau composite et une mise en place rapide et facilement automatisable des fibres.

Les possibilités multiples de positionnement des fibres ou autres éléments du matériau composite (sens et orientation des fibres, alternance des couches, adjonction de couches supplémentaires telles le film de colle 16 ou le tissu 17 de verre, ou autre matériau) dans les différentes parties de la bielle confèrent à cette dernière des propriétés de résistance mécanique à diverses sollicitations (compression, traction, flambage, torsion, tenue aux chocs) remarquables.

Enfin, l'invention n'est pas limitée aux modes de réalisation représentés et décrits ci-dessus, mais en couvre au contraire toutes les variantes, notamment en ce qui concerne la nature du matériau composite (fibres, résine, film de colle, tissu de renfort), les formes et dimensions de la partie courante, des parties d'extrémité et des parties de raccordement de la bielle, la nature et l'agencement des éventuels moyens de conformation des parties d'extrémité de la bielle, ainsi que les modes d'application d'une pression sur le mandrin revêtu de fibres et de réalisation d'un mandrin susceptible d'être extrait de l'intérieur de la bielle sans atteinte de l'intégrité de cette dernière.

Le procédé de l'invention peut être mis en oeuvre pour l'obtention de bielles comportant une chape à une extrémité et une tête simple aplatie à l'autre extrémité.

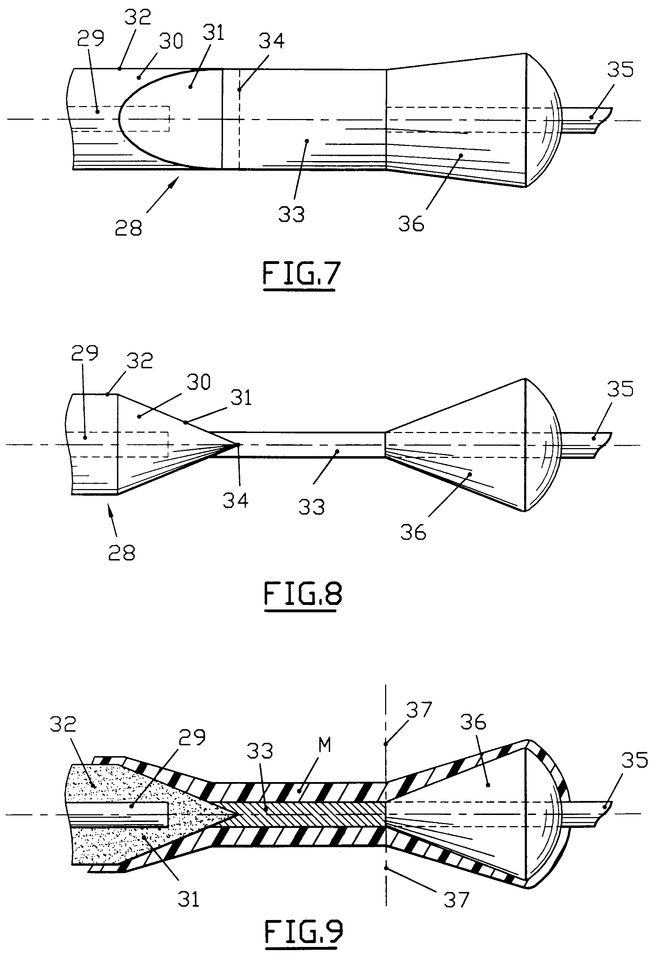

Les figures 7 à 14 illustrent la réalisation conformément à l'invention d'une telle bielle.

Pour tenir compte de la forme de l'extrémité en tête aplatie ou oreille de la bielle, le mandrin 28 comporte une tige centrale creuse perforée 29 analogue à la tige 6 de la figure 6 mais ne s'étendant dans le corps en sable 30 que jusqu'à hauteur de la partie 31 de raccordement de la partie centrale 32 à la partie du mandrin correspondant à la tête aplatie de la bielle.

Dans le prolongement de la partie de raccordement 31 qui est, ainsi que la partie centrale 32, réalisée par exemple en "arényl" comme les parties 8 et 9 du mandrin de la figure 6, est fixée par collage une pièce métallique 33 de section rectangulaire aplatie et sur laquelle seront bobinées ou déposées les fibres correspondant à la tête aplatie de la bielle. De préférence, l'extrémité de la pièce 33 est enfourchée par sa tranche sur l'arête 34 de la partie 31.

Au-delà de la pièce 33 est disposée une tige 35, solidaire de la pièce 33 et dans l'axe de la tige 29, les tiges 29,35 définissant l'axe de rotation du mandrin 28. Sur la tige 35, à côté de la pièce 33, est disposée une poire de retournement 36 analogue aux poires 11 de la figure 3.

La mise en place, par bobinage ou dépose au contact des fibres sur le mandrin 28, dont l'autre extrémité est analogue à la partie gauche du dispositif de la figure 4, puisqu'à cette autre extrémité est prévue une chape normale à deux joues, s'opère exactement comme dans l'exemple de la figure 6.

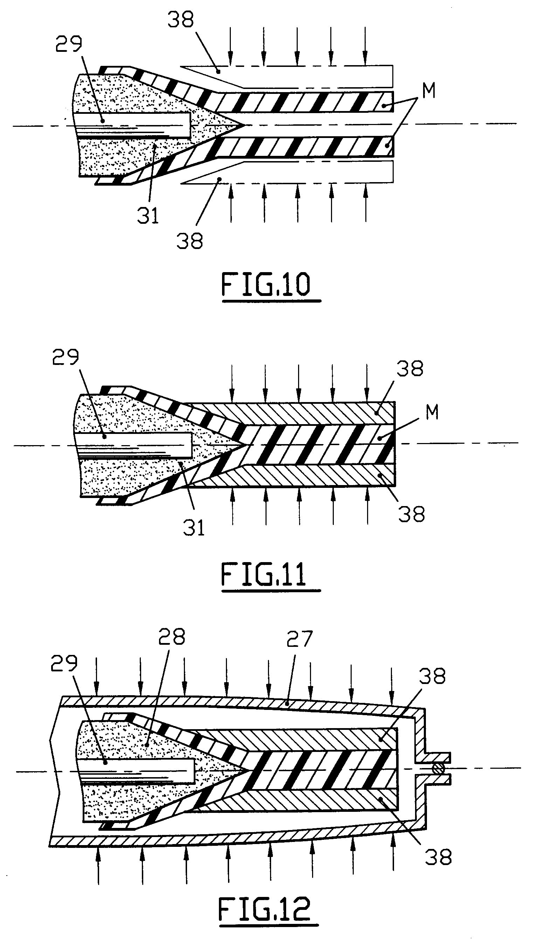

La figure 9 représente le mandrin des figures 7 et 8 revêtu de fibres.

Ensuite, le matériau composite de revêtement M est incisé en 37 afin de procéder au retrait de la tige 35, de la poire 36 et de la pièce 33, comme illustré par la figure 10.

Des pièces de conformation 38, analogues aux pièces 21a,21b de la figure 5, sont mises en place à la manière d'un serre-joint sur les deux flancs opposés de la partie du matériau composite M en regard des parties de mandrin 31 et de la pièce 33 retirée. En rapprochant les pièces 38, on supprime (figure 11) la cavité laissée par le retrait de la pièce 33.

L'ensemble du mandrin, avec son conformateur 38, est placé comme dans l'exemple de la figure 6, dans une vessie 27 (figure 12), l'ensemble étant ensuite mis en autoclave pour polymériser sous pression la résine du matériau composite.

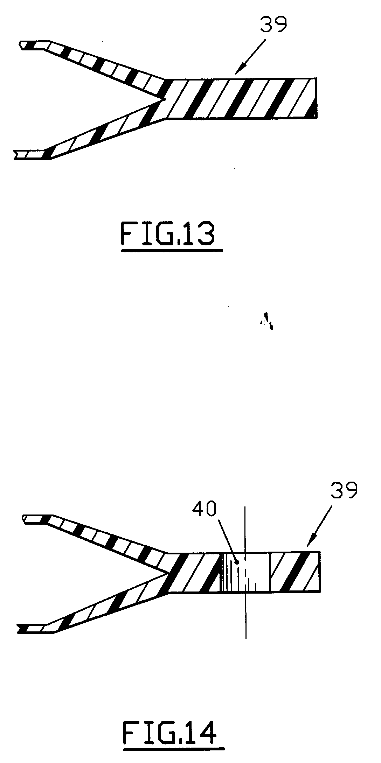

Après polymérisation, la vessie 27 est retirée, le sable du mandrin 28 enlevé après ramollissement par l'intermédiaire d'eau chaude introduite par le tube perforé 29 et la bielle creuse démoulée (figure 13) fait apparaître à l'une de ses extrémités une tête aplatie 39 qui (figure 14), après détourage, surfaçage et alésage d'un trou 40, constituera une oreille ou chape à une seule joue de type classique.

## Revendications

1. Procédé de fabrication d'une bielle monobloc en matériau composite, comprenant une partie courante creuse cylindrique (1) reliée à chaque extrémité à une chape (2) par une partie de raccordement (3) d'épaisseur évolutive, consistant :
- a réaliser sur un arbre central rigide (6) un mandrin **extractible, notamment un mandrin** fusible (7) comportant une partie centrale cylindrique (8) prolongée à chaque extrémité par une partie **de raccordement** (9) correspondant auxdites parties de raccordement (3) de la bielle et elle-même prolongée par une pièce (10) de section rectangulaire correspondant aux**dites** chapes (2) de la bielle ;
- à bobiner et/ou déposer au contact sur ledit mandrin (7) et lesdites pièces (10) de section rectangulaire des fibres pré-imprégnées, suivant un nombre de couches et une inclinaison des fibres par rapport à l'axe du mandrin prédéterminés ;
- à polymériser avec application d'une pression homogène de compactage sur toute la surface externe de l'ensemble ainsi obtenu ;
- puis, à retirer lesdits mandrin (7) et pièces (10) et percer et usiner les**dites** chapes (2) aux cotes requises.

2. Procédé de fabrication d'une bielle monobloc en matériau composite, comprenant une partie courante creuse cylindrique (1) reliée par une partie de raccordement (3) d'épaisseur évolutive, d'un côté, à une chape (2) et, de l'autre, à une tête aplatie (39), consistant :
- à réaliser sur un arbre central rigide (29) un mandrin **extractible, notamment un mandrin** fusible (28), comportant une partie centrale cylindrique (32) prolongée à chaque extrémité par une partie de raccordement (9, 31) correspondant auxdites parties évolutives (3) de la bielle, l'une (9) desdites parties de raccordement étant prolongée par une pièce (10) de section rectangulaire correspondant à la chape (2) de la bielle, cependant que l'autre (31) desdites parties de raccordement est prolongée par une pièce (33) de section rectangulaire correspondant à ladite tête aplatie (39) de la bielle ;
- a bobiner et/ou déposer au contact sur ledit mandrin (28) et **lesdites** pièces **(10,33)** de section rectangulaire, des fibres pré-imprégnées, suivant un nombre de couches et une inclinaison des fibres par rapport à l'axe du mandrin prédéterminés ;
- a retirer ladite pièce (33) **correspondant à ladite tête aplatie (39) de la bielle** et presser **à l'aide de moyens de conformation (38) appropriés à la forme de ladite tête aplatie (39)**, l'un contre l'autre les flancs opposés de la partie du matériau composite en regard de ladite pièce retirée (33), pour former ladite tête aplatie (39) ;
- à polymériser avec application d'une pression homogène de compactage sur toute la surface externe de l'ensemble ainsi obtenu ;
- puis à retirer lesdits mandrin (28) et pièce (10) **correspondant à ladite chape (2) de la bielle** et percer et usiner lesdites chape (2) et tête aplatie (39) aux cotes requises.

3. Procédé suivant la revendication 1 **ou 2**, caractérisé en ce qu'après bobinage-dépose des fibres et avant polymérisation-compactage du matériau composite, **la ou** chaque **chape (2) avec sa partie de raccordement (3)**, est munie de moyens de conformation (21a, 21b) appropriés à la forme de la**dite** chape (2) de la belle.

4. Procédé suivant l'une des revendications 1 à 3, caractérisé en ce que **l'ensemble de l'arbre central rigide (6), du mandrin muni des fibres, ainsi que, le cas échéant, des moyens (21a, 21b, 38) de conformation selon la revendication 3, est disposé** à l'intérieur d'une vessie qui est ensuite mise sous vide, puis ledit ensemble **avec sa vessie** (27) est placé dans un autoclave sous pression pour assurer ladite polymérisation.

5. Procédé suivant l'une des revendications 1 à 4, plus particulièrement appliqué à la réalisation d'une belle comportant des parties de fixation (2, 39) reliées à une partie courante (1) d'épaisseur de paroi constante par une partie de raccordement (3) de section et d'épaisseur de paroi variables, caractérisé en ce que l'on bobine des fibres sur l'ensemble du mandrin (8 à 10 ; 28) par enroulement circonférentiel et longitudinal et, sur lesdites parties de fixation et lesdites parties de raccordement, on met en place des fibres par bobinage ou dépose au contact en fonction des épaisseurs locales à obtenir.

6. Procédé suivant l'une des revendications 1 à 5, caractérisé en ce qu'entre certaines au moins des couches de fibres d'au moins la partie courante (1), on dépose au contact un film de colle (16) et éventuellement au moins une couche de tissu de verre (17).

7. Procédé suivant l'une des revendications 1 à 6, caractérisé en ce que sur une même couche de fibres, on fait varier l'angle d'inclinaison de la fibre bobinée ou déposée au contact, selon la zone de la belle.

8. Procédé suivant la revendication 3, caractérisé en ce que lesdits moyens de conformation (21a, 21b) **appropriés à la forme de ladite chape (2) de la bielle** définissent deux surfaces planes parallèles (23) pressées l'une en direction de l'autre en prenant en sandwich les parties de mandrin (10) revêtues de fibres correspondant **à ladite** chape (2) de la bielle et deux surfaces planes inclinées (24) également pressées l'une vers l'autre en prenant en sandwich les parties de mandrin (9) revêtues de fibres correspondant **à ladite** partie (3) de raccordement de la partie courante (1) de la bielle à ladite chape (2).

9. Procédé suivant l'une des revendications 1 à 8, caractérisé en ce que l'on réalise le mandrin (7, 28) par moulage de sable et de liant, ledit arbre central (6, 29) étant creux et sa paroi étant percée de trous (6a) ou poreuse.

10. Bielle en matériau composite monobloc obtenue selon le procédé de l'une quelconque des revendications 1 à 9, comprenant une partie courante tubulaire (1), deux parties d'extrémités de fixation (2, 39) et des parties tubulaires (3) de raccordement entre partie courante et parties d'extrémité, constituées par un matériau composite comprenant des fibres déposées par couches successives et orientées, par rapport à l'axe longitudinal de la bielle, suivant divers angles compris entre 0° et 90°.

11. Bielle suivant la revendication 10, comprenant deux parties d'extrémité en forme de chape (2).

12. Bielle suivant la revendication 10, comprenant à une extrémité une chape (2) et à l'autre extrémité une tête aplatie (39).

13. Bielle suivant l'une des revendications 10 à 12, caractérisée en ce que la partie courante (1) présente une épaisseur constante et comporte un film de colle (16) entre deux couches de fibres superposées (13, 14).

14. Bielle suivant l'une des revendications 10 à 13, caractérisée en ce que la dernière couche de fibres mise en place est constituée de fibres bobinées circonférentiellement (15).

15. Bielle suivant la revendication 14, caractérisée en ce qu'au droit de la partie courante (1) une couche de tissu de verre (17) est interposée entre la dernière couche de fibres (15) et l'avant-dernière (14).

16. Bielle suivant l'une des revendications 10 à 15, caractérisée en ce qu'elle comporte, au niveau des parties de fixation (2, 39) et des parties de raccordement (3), des fibres déposées circonférentiellement (15, 18, 19, 20) en alternance avec les fibres (13, 14) déposées avec une inclinaison sur l'axe de la bielle.

17. Belle suivant la revendication 16, caractérisée en ce que les parties de raccordement (3) ont une épaisseur de paroi d'épaisseur progressive, cependant que les parties de fixation (2, 39) sont à joue (4) d'épaisseur constante.

18. Bielle suivant l'une des revendications 10 à 17, caractérisée en ce que les fibres d'une même couche forment un angle d'inclinaison par rapport a l'axe longitudinal de la bielle qui varie selon la zone de la bielle.

## Claims

1. Method of manufacturing a single-piece connecting rod made of composite material, comprising a cylindrical hollow main part (1) connected at each end to a fork joint (2) by a connecting part (3) with a changing thickness, consisting of:
- producing, on a rigid central shaft (6), an extractable spindle, notably a fusible spindle (7), having a cylindrical central part (8) extended at each end by a connecting part (9) corresponding to said connecting parts (3) of the connecting rod and itself extended by a piece (10) with a rectangular cross section corresponding to said fork joints (2) on the connecting rod;
- winding and/or depositing in contact on said spindle (7) and said pieces (10) with a rectangular cross section, pre-impregnated fibres, in accordance with a predetermined number of layers and a predetermined inclination of the fibres with respect to the axis of the spindle;
- polymerising with the application of an even compacting pressure over the entire external surface of the assembly thus obtained;
- then removing said spindle (7) and pieces (10) and drilling and machining said fork joints (2) to the required dimensions.

2. Method of manufacturing a single-piece connecting rod made of composite material, comprising a cylindrical hollow main part (1) connected by a connecting part (3) with a changing thickness, on the one hand to a fork joint (2) and on the other hand to a flattened head (39), consisting of:
- producing, on a rigid central shaft (29), an extractable spindle, notably a fusible spindle (28), having a cylindrical central part (32) extended at each end by a connecting part (9, 31) corresponding to said changing parts (3) of the connecting rod, one (9) of said connecting parts being extended by a piece (10) with a rectangular cross section corresponding to the fork joint (2) on the connecting rod, whilst the other one (31) of the said connecting parts is extended by a piece (33) with a rectangular cross section corresponding to said flattened head (39) on the connecting rod;
- winding and/or depositing in contact on said spindle (28) and said pieces (10, 33) with a rectangular cross section, pre-impregnated fibres, in accordance with a predetermined number of layers and a predetermined inclination of the fibres with respect to the axis of the spindle;
- removing said piece (33) corresponding to said flattened head (39) of the connecting rod and pressing against each other, by means of shaping means (38) appropriate to the shape of said flattened head (39), the opposing flanks of the part of the composite material facing said removed piece (33), in order to form said flattened head (39);
- polymerising with application of an even compacting pressure over the entire external surface of the assembly thus obtained;
- then removing said spindle (28) and piece (10) corresponding to said fork joint (2) on the connecting rod and drilling and machining said fork joint (2) and flattened head (39) to the required dimensions.

3. Method according to Claim 1 or 2, characterised in that, after winding/deposition of fibres and before polymerisation/compacting of the composite material, the or each fork joint (2) with its connecting part (3) is provided with shaping means (21a, 21b) appropriate to the shape of said fork joint (2) on the connecting rod.

4. Method according to one of Claims 1 to 3, characterised in that the assembly consisting of the rigid central shaft (6), the spindle provided with the fibres, as well as, where applicable, shaping means (21a, 21b, 38) according to Claim 3, is disposed inside a bladder which is then put under vacuum, and then said assembly with its bladder (27) is placed in an autoclave under pressure in order to ensure said polymerisation.

5. Method according to one of Claims 1 to 4, more particularly applied to the production of a connecting rod having fixing parts (2, 39) connected to a main part (1) with a constant wall thickness by a connecting part (3) with variable cross section and wall thickness, characterised in that fibres are wound over the entire spindle (8 to 10; 28) by circumferential and longitudinal winding and, on said fixing parts and said connecting parts, fibres are placed by winding or deposition in contact according to the local thicknesses to be obtained.

6. Method according to one of Claims 1 to 5, characterised in that between at least some of the layers of fibres of at least the main part (1), a film of glue (16) and optionally at least one layer of glass cloth (17) are deposited in contact.

7. Method according to one of Claims 1 to 6, characterised in that, on one and the same layer of fibres, the angle of inclination of the fibre which is wound or deposited in contact is varied, according to the region of the connecting rod.

8. Method according to Claim 3, characterised in that said shaping means (21a, 21b) appropriate to the shape of said fork joint (2) on the connecting rod define two parallel plane surfaces (23) pressed in the direction of each other and sandwiching the parts of the spindle (10) coated with fibres corresponding to said fork joint (2) on the connecting rod and two inclined plane surfaces (24) also pressed towards each other and sandwiching the parts of the spindle (9) coated with fibres corresponding to said part (3) connecting the main part (1) of the connecting rod to said fork joint (2).

9. Method according to one of Claims 1 to 8, characterised in that the spindle (7, 28) is produced by sand and binder moulding, said central shaft (6, 29) being hollow and its wall having holes (6a) in it or being porous.

10. Connecting rod made of single-piece composite material obtained according to the method of any one of Claims 1 to 9, comprising a tubular main part (1), two end fixing parts (2, 39) and tubular parts (3) for connection between the main part and end parts, consisting of a composite material comprising fibres deposited in successive layers and oriented, with respect to the longitudinal axis of the connecting rod, at various angles lying between 0° and 90°.

11. Connecting rod according to Claim 10, comprising two end parts in the form of a fork joint (2).

12. Connecting rod according to Claim 10, comprising at one end a fork joint (2) and at the other end a flattened head (39).

13. Connecting rod according to one of Claims 10 to 12, characterised in that the main part (1) has a constant thickness and incorporates a film of glue (16) between two layers of fibres (13, 14) placed one on top of the other.

14. Connecting rod according to one of Claims 10 to 13, characterised in that the last layer of fibres put in place consists of circumferentially wound fibres (15).

15. Connecting rod according to Claim 14, characterised in that, in line with the main part (1), a layer of glass cloth (17) is interposed between the last layer of fibres (15) and the second to last (14).

16. Connecting rod according to one of Claims 10 to 15, characterised in that it has, at the fixing parts (2, 39) and the connecting parts (3), circumferentially deposited fibres (15, 18, 19, 20) alternating with the fibres (13, 14) deposited with an inclination to the axis of the connecting rod.

17. Connecting rod according to Claim 16, characterised in that the connecting parts (3) have a wall thickness with a progressive thickness, whilst the fixing parts (2, 39) have a cheek (4) with a constant thickness.

18. Connecting rod according to one of Claims 10 to 17, characterised in that the fibres in one and the same layer form an angle of inclination with respect to the longitudinal axis of the connecting rod which varies according to the region of the connecting rod.

## Patentansprüche

1. Verfahren zur Herstellung einer einteiligen Pleuelstange aus Verbundmaterial, mit einem zylindrischen, hohlen laufenden Abschnitt (1), der an jedem Ende über einen Verbindungsabschnitt (3) mit sich vergrößernder Stärke mit einer Gabel (2) verbunden ist, enthaltend:
- Herstellen eines extrahierbaren Dorns, insbesondere eines schmelzbaren Dorns (7), auf einem starren Mittelbaum (6), wobei der Dorn einen zylindrischen Mittelteil (8) enthält, der an jedem Ende durch ein Verbindungsteil (9) verlängert ist, der den Verbindungsabschnitten (3) der Pleuelstange entspricht und seinerseits durch ein Teil (10) mit rechtwinkligem Querschnitt verlängert ist, das der Gabel (2) der Pleuelstange entspricht;
- Wickeln und/oder Aufbringen von vorimprägnierten Fasern auf den Dorn (7) und die Teile (10) mit rechtwinkligem Querschnitt in einer vorgegebenen Anzahl von Schichten und mit einer vorgegebenen Neigung der Fasern in bezug auf die Achse des Dorns;
- Polymerisieren unter Ausübung eines gleichmäßigen Verdichtungsdrucks auf die gesamte äußere Oberfläche der so erhaltenen Gesamtheit;
- dann Herausziehen des Dorns (7) und der Teile (10) und Durchlochen und Bearbeiten der Gabel (2) auf die geforderten Maße.

2. Verfahren zur Herstellung einer einteiligen Pleuelstange aus Verbundmaterial, die einen zylindrischen, hohlen laufenden Abschnitt (1) enthält, der über einen Verbindungsteil (3) mit sich vergrößernder Stärke einerseits mit einer Gabel (2) und andererseits mit einem abgeflachten Kopf (39) verbunden ist, enthaltend:
- Herstellen eines erweiterbaren Dorns, insbesondere eines schmelzbaren Dorns (28), auf einem starren Mittelbaum (29), wobei der Dorn einen zylindrischen Mittelteil (32) enthält, der an jedem Ende durch ein Verbindungsteil (9, 31) verlängert ist, der den sich erweiternden Verbindungsabschnitten (3) der Pleuelstange entspricht, wobei einer (9) der Verbindungsteile durch ein Teil (10) mit rechtwinkligem Querschnitt verlängert ist, das der Gabel (2) der Pleuelstange entspricht, während der andere (31) der Verbindungsteile durch ein Teil (33) mit rechtwinkligem Querschnitt verlängert ist, das dem abgeflachten Kopf (39) der Pleuelstange entspricht;
- Wickeln und/oder Aufbringen von vorimprägnierten Fasern auf den Dorn (28) und die Teile (10, 33) mit rechtwinkligem Querschnitt in einer vorgegebenen Anzahl von Schichten und einer vorgegebenen Neigung der Fasern in bezug auf die Achse des Dorns;
- Herausziehen des Teils (33), das dem abgeflachten Kopf (39) der Pleuelstange entspricht, und Pressen der gegenüberliegenden Seiten des Teils aus Verbundmaterial gegenüber dem herausgezogenen Teil (33) mit Hilfe von an die Form des abgeflachten Kopfes (39) angepaßten Formgebungsmitteln (38), um den abgeflachten Kopf (39) zu bilden;
- Polymerisieren unter Ausübung eines gleichmäßigen Verdichtungsdrucks auf die gesamte äußere Oberfläche der so erhaltenen Gesamtheit;
- dann Herausziehen des Dorns (28) und des der Gabel (2) der Pleuelstange entsprechenden Teils (10) sowie Durchlochen und Bearbeiten der Gabel (2) und des abgeflachten Kopfes (39) auf die geforderten Maße.

3. Verfahren nach Anspruch 1 oder 2, dadurch gekennzeichnet, daß nach dem Wickeln/Aufbringen der Fasern und vor der Polymerisation/Verdichtung des Verbundmaterials die oder jede Gabel (2) zusammen mit ihrem Verbindungabschnitt (3) mit an die Form der Gabel (2) der Pleuelstange angepaßten Formgebungsmitteln (21a, 21b) versehen wird.

4. Verfahren nach einem der Ansprüche 1 bis 3, dadurch gekennzeichnet, daß die Gesamtheit aus dem starren Mittelbaum (6), dem mit Fasern versehenen Dorn sowie gegebenenfalls den Formgebungsmitteln (21a, 21b, 38) nach Anspruch 3 in einem Behälter angeordnet wird, der anschließend evakuiert wird, woraufhin die Gesamtheit mit ihrem Behälter (27) in einem mit Druck beaufschlagten Autoklaven angeordnet wird, um die Polymerisation sicherzustellen.

5. Verfahren nach einem der Ansprüche 1 bis 4, das insbesondere auf die Herstellung einer Pleuelstange angewendet wird, die Befestigungsabschnitte (2, 39) enthält, die über einen Verbindungsabschnitt (3) mit veränderlichem Querschnitt und veränderlicher Wanddicke mit einem laufenden Abschnitt (1) mit konstanter Wanddicke verbunden sind, dadurch gekennzeichnet, daß Fasern auf den gesamten Dorn (8 bis 10; 28) durch Wickeln in Umfangsrichtung und in Längsrichtung gewickelt werden, und daß auf die Befestigungsabschnitte und die Verbindungsabschnitte Fasern durch Wickeln oder Aufbringen in Abhängigkeit von den zu erhaltenden lokalen Dicken angebracht werden.

6. Verfahren nach einem der Ansprüche 1 bis 5, dadurch gekennzeichnet, daß wenigstens zwischen bestimmten der Faserschichten wenigstens des laufenden Abschnitts (1) ein Klebefilm (16) und eventuell wenigstens eine Glasgewebeschicht (17) in aufgebracht werden.

7. Verfahren nach einem der Ansprüche 1 bis 6, dadurch gekennzeichnet, daß auf derselben Faserschicht der Neigungswinkel der gewickelten oder aufgebrachten Faser je nach Zone der Pleuelstange unterschiedlich ist.

8. Verfahren nach Anspruch 3, dadurch gekennzeichnet, daß die an die Form der Gabel (2) der Pleuelstange angepaßten Formgebungsmittel (21a, 21b) zwei parallele ebene Oberflächen (23), wovon eine in Richtung zur anderen gedrückt wird, indem die mit Fasern beschichteten Teile des Dorns (10), die dem Gabelbügel (2) der Pleuelstange entsprechen, sandwichartig angeordnet werden, sowie zwei geneigte ebene Oberflächen (24) definieren, die ebenfalls gegeneinander gedrückt werden, indem die mit Fasern beschichteten Teile des Dorns (9), die dem Verbindungsteil (3) des laufenden Abschnitts (1) der Pleuelstange mit der Gabel (2) entsprechen, sanwichartig angeordnet werden

9. Verfahren nach einem der Ansprüche 1 bis 8, dadurch gekennzeichnet, daß der Dorn (7, 28) durch Sand- und Bindemittelformung hergestellt wird, wobei der Mittelbaum (6, 29) hohl und seine Wandung mit Löchern (6a) versehen oder porös ist.

10. Einteilige Pleuelstange aus Verbundmaterial, die gemäß dem Verfahren nach einem der Ansprüche 1 bis 9 erhalten wird, mit einem rohrförmigen, laufenden Abschnitt (1), zwei Befestigungsabschnitten (2, 39) und rohrförmigen Verbindungsabschnitten (3) zwischen dem laufenden Abschnitt und den Endstücken, die aus einem Verbundmaterial gebildet sind, das Fasern enthält, die in aufeinanderfolgenden Schichten aufgebracht sind und in bezug auf die Längsachse der Pleuelstange unter verschiedenen Winkeln im Bereich von 0° bis 90° orientiert sind.

11. Pleuelstange nach Anspruch 10, mit zwei Endstücken in Form einer Gabel (2).

12. Pleuelstange nach Anspruch 10, die an einem Ende eine Gabel (2) und am anderen Ende einen abgeflachten Kopf (39) umfaßt.

13. Pleuelstange nach einem der Ansprüche 10 bis 12, dadurch gekennzeichnet, daß der laufende Abschnitt (1) eine konstante Dicke aufweist und zwischen zwei übereinanderliegenden Faserschichten (13, 14) einen Klebefilm (16) umfaßt.

14. Pleuelstange nach einem der Ansprüche 10 bis 13, dadurch gekennzeichnet, daß die letzte aufgebrachte Faserschicht aus in Umfangsrichtung gewickelten Fasern (15) gebildet ist.

15. Pleuelstange nach Anspruch 14, dadurch gekennzeichnet, daß am Ort des laufenden Abschnitts (1) zwischen die letzte Faserschicht (15) und die vorletzte (14) eine Glasgewebeschicht (17) eingefügt ist.

16. Pleuelstange nach einem der Ansprüche 10 bis 15, dadurch gekennzeichnet, daß sie auf Höhe der Befestigungsteile (2, 39) und der Verbindungsabschnitt (3) in Umfangsrichtung aufgebrachte Fasern (15, 18, 19, 20) enthält, die abwechselnd mit den mit einer Neigung in bezug auf die Achse der Pleuelstange aufgebrachten Fasern (13, 14) angeordnet sind.

17. Pleuelstange nach Anspruch 16, dadurch gekennzeichnet, daß die Verbindungsabschnitte (3) eine Wandstärke mit zunehmender Dicke besitzen, während die Befestigungsteile (2, 39) ein Seitenteil (4) mit konstanter Dicke besitzen.

18. Pleuelstange nach einem der Ansprüche 10 bis 17, dadurch gekennzeichnet, daß die Fasern derselben Schicht einen Neigungswinkel in bezug auf die Längsachse der Pleuelstange bilden, der je nach Zone der Pleuelstange unterschiedlich ist.
